# EUROPEAN PATENT APPLICATION

(11) **EP 3 251 805 A1**
(43) Date of publication of application: **06.12.2017**
(21) Application number: 17172433.9
(22) Date of filing: 23.05.2017
(51) Int. Cl.: B25J 9/16, G05B 19/042, G06F 3/01

(54) **MULTIAXIAL MOTION CONTROL DEVICE AND METHOD, IN PARTICULAR CONTROL DEVICE AND METHOD FOR A ROBOT ARM**

(30) Priority: 02.06.2016 TW 105117479
(71) Applicant: Princo Corp., Hsinchu (TW)
(72) Inventor: CHIU, Pei-Liang, Hsinchu City (TW)
(74) Representative: Karl, Christof

(57) **Abstract**

The present invention relates to a multiaxial motion control device, comprising a motion detector to be attached to a moveable object to detect multiple axial movement of the moveable object and to output detection results and a control device to convert said detection results into motion control commands for a multiaxial motion driving device, in particular motion control commands for a plurality of arm segments of a robot arm. A method to control motions of the multiaxial motion driving device, in particular the robot arm, using the control device are also disclosed.

## Description

The present invention relates to a multiaxial motion control device, comprising a motion detector to be attached to a moveable object to detect multiple axial movement of the moveable object and to output detection results and a control device to convert said detection results into motion control commands for a multiaxial motion driving device, in particular motion control commands for a plurality of arm segments of a robot arm. A method to control motions of the multiaxial motion driving device, in particular the robot arm, using the control device are also disclosed.

### Related Application

This non-provisional application claims priority benefit from Taiwan patent application filing number 105117479, filed on June 2, 2016, the disclosure of which is incorporated herein by reference in its entirety.

### Background

### 1. Technical Field

The present invention relates to a multiaxial motion control device and method, and more particularly to a method and device for controlling a robot arm. The present invention discloses a multiaxial motion control device and method based on motion detection, and a multiaxial motion driving system using the control method and the control device.

### 2. Related Art and Problems Being Solved

The multiaxial motion driving device refers to a carrier machine with a platform which drives the platform to move in a plurality of axial directions at the same time. In most applications, the term axis is usually referred to one of the plural axes in the space coordinate system, while it can also be one of the axes in a plane coordinate system. The result of a multiaxial motion driving is usually a movement of three dimensions, but it can also be two- or even one-dimensional motion.

The multiaxial motion driving device most commonly used in the industry is the robot arm. Robot arm, also known as the robot, is a widely-used machine in the manufacturing industrial. In recent years the robot arm has entered into a variety of areas such as outer space, submarine, medical, military, agriculture, security, service and recreation industries, and even in daily life.

Humanoid robots usually refer to robots that highly simulate human behavior and even the physiological phenomena of human being. The control of humanoid robots used in industrial robots has become an emerging field of the control methodology. Theoretically, if the robot arm or its fingers can be moved in a manner similar to that of a human arm or finger, more elaborate work can be performed. Therefore, a variety of control or training technology of robot arm or finger to imitate the human arm or finger movement has been developed.

Chinese utility model No. CN 203418539U discloses a finger-guessing robot with an image recognition system. The robot is equipped with a camera and uses image recognition techniques to identify the gestures of an object and randomly generate finger-guessing gestures.

U.S. Patent No. 9,129,154 B2, entitled "Gesture recognition device, robot system including the same and gesture recognition method using the same," discloses a robot arm comprising a gesture recognition device that defines a gesture area using face recognition techniques. The system identifies gestures in the gesture area with image recognition techniques. Gesture identification parameters include position, motion direction and shape changes. The patent proposes to use this technique as a control device for humanoid robots.

Sylvain Calinon et al. discloses a gesture recognition method for use in controlling a humanoid robot in their publication "Stochastic Gesture Production and Recognition Model for a Humanoid Robot." The system uses optical image recognition technology to train the robot to make the same action as the hand of human being. See: Proceedings of 2004 IEEE / RSJ International Conference on Intelligent Robots and Systems, September 28-October 2, 2004, Sendai, Japan.

U.S. patent publication US 2015/109202 discloses systems, articles, and methods perform gesture identification with limited computational resources. The system is equipped with a gesture library that stores a plurality of gesture models and uses the techniques of the decision tree to match the movements of an arm detected by the detector to identify the gestures represented by the arm movements.

Korean patent KR20080114197 discloses a method of calculating the position of a wearable robot arm. The method estimates a position to be reached by a motion based on an input force received and moves the free end of a robot arm to that position.

WO2009/124951 discloses a control-command architecture for a mobile robot using articulated limbs. The invention relates to a control method for a humanoid robot, providing an architecture with three levels of computers that generates a motion command of a robot arm and achieves correct motion control by a smoothing technique.

In addition, controlling the robot arm by a remote-control device is also known. However, this control method requires buttons or a joystick to control the movement of the respective arm segments of the robot arm, which is not intuitive. Maneuvers must be trained before they can perform motion control.

As is apparent from the discussion of the above known techniques, the conventional robot arm control technique has been able to make the same gesture or actions according to the human gesture or actions. However, the known technology is mainly based on optical image recognition technology in their analyses of human gesture or actions. Limited by the fact that the optical detection technology is basically a two-dimensional detection technology, the human gesture or actions so detected cannot be accurate. While the use of other types of detectors may improve the accuracy of detection, they need to install a plurality of the detector on human arm, etc. It is necessary to calculate the parameters of all the plural detectors at the time of identification or control. Another shortcoming is that the maneuvers need to be trained before they can perform the motion control.

In addition to the robot arm, there are other multiaxial motion driving devices. They are, such as, the automated guided vehicle (AGV), the remotely controlled aircraft or submarine, the electric pet and so on. Among them, the remotely controlled aircraft or submarine need to be able to perform three-dimensional motion drive, AGV usually only needs to perform two-dimensional movements. As for the electric pet or other similar toys, in addition to moving around in a plane or a substantial plane, they need to perform vertical movements, such as jumping, standing up and squatting down. However, in the industry there is no multiaxial motion driving or control device or method that allows the user to perform motion control without learning.

### Objectives of the Invention

It is an object of the present invention to provide a multiaxial motion control device and method based on motion detection.

It is also an object of the present invention to provide a multiaxial motion control device for correct detection of the movement of a human arm or finger for controlling a multiaxial motion driving device to perform the same movement.

It is also an object of the present invention to provide a novel multiaxial motion control device which drives a robot arm following the movement of a human arm or finger, using only a small amount of detectors.

It is also an object of the present invention to provide a multiaxial motion control device for providing a user with an intuitive approach to control the movement of a multiaxial motion driving device.

It is also an object of the present invention to provide a multiaxial motion driving system using the invented multiaxial motion control device.

It is also an object of the present invention to provide a method for controlling the movement of a multiaxial motion driving device using the multiaxial motion control device.

### Summary of the Invention

According to the embodiments, the multiaxial motion control device of the present invention comprises:
a motion detector for wearing on a movable object to successively detect an amount of motion of the movable object and output a detection result; and
a control device for receiving the detection result of the motion detector and, based on the detection result, generating a motion control command for a multiaxial motion driving device comprising a plurality of motion actuators designated for each axial component of motion of the multiaxial motion driving device;
wherein the motion detector comprises a multiaxial motion detector for detecting a motion of the motion detector and generating motion parameters defining axial motion components of the motion in at least three axes as the detection result of the motion detector;
wherein the control device comprises a command interpreting circuit for converting a series of successive motion parameters of the motion detector into a series of successive motion control commands; wherein one motion control command comprises driving commands for the respective motion actuators; and
wherein the series of successive motion control commands controls the motion actuators, so that they together move a reference point on the multiaxial motion driving device substantially along a motion trajectory of the motion detector.

In a preferred embodiment of the present invention, the multiaxial motion driving device is a robot arm having a plurality of arm segments and the motion control command comprises driving commands for respective motion actuators driving the respective arm segments of the robot arm. In other embodiments of the present invention, the multiaxial motion driving device is an AGV having a plurality of driving wheels and the motion control command comprises driving commands for the respective drive wheels that drive the AGV to move on a plane. The multiaxial motion driving device may also be a multiaxial motion driving device carried by a fluid. In this example, the motion control command comprises driving commands for a plurality of motion actuators driving the multiaxial motion driving device to move in three dimensions.

In a preferred embodiment of the present invention, the motion detector is a triaxial motion detector, or preferably a six-axis motion detector, most preferably a nine-axis motion detector/magnetometer.

In an advantageous application example of the present invention, the movable object is a human arm or a finger. In such an example, the motion detector comprises a motion detector for wearing in the vicinity of the free end of the arm or finger. r.

In a particular example of the invention, the motion parameters generated by the motion detector comprises representations of a motion direction and a motion amount on a three-dimensional space, and a plurality of successive motion parameters forms a spatial motion trajectory of the motion.

In a preferred embodiment of the present invention, the control device comprises a driving device for driving the motion actuators of the respective axial components of the multiaxial motion driving device in accordance with the motion control command generated by the command interpreting circuit. In other embodiments of the present invention, the control device comprises a wireless communication device for establishing a communication channel with the multiaxial motion driving device to transmit the motion control command to the multiaxial motion driving device. In such an example, the multiaxial motion driving device comprises a driving device for driving the motion actuators of the respective axial components of the multiaxial motion driving device in accordance with the motion control command.

When the multiaxial motion driving device is a robot arm, the robot arm may comprise a base, at least two arm segments, a joint operatively connecting the arm segments, a joint operatively connecting an arm segment and the base and motion actuators to drive the arm segments to move relatively to the joints. The at least two arm segments comprise a first arm segment movably connected at the base and a second arm segment movably connected to the first arm segment.

In the above embodiment, the control device generates a motion control command for driving the arm segments to move relatively to the joints, whereby a reference point at a free end of the second arm segment moves along a motion trajectory following a motion trajectory of the motion detector.

The multiaxial motion driving device may also provide a motion driving capability independent of the motion of the device itself, to drive a motion of an auxiliary element. The multiaxial motion driving device may also provide an auxiliary function independent of a motion to be driven; i.e, to actuate an action in accordance with a motion of the multiaxial motion control device.

The present invention also discloses a method for controlling the movement of the multiaxial motion driving device using the multiaxial motion control device, in particular a method for controlling the movement of a robot arm by using the multiaxial motion control device. The method comprises the following steps:
generating a motion of the motion detector along a motion trajectory;
the motion detector detecting the motion and generating motion parameters defining axial components of the motion in at least three axes as a detection result of the motion detector; the detection result may also include description of a spatial motion trajectory of the movement;
the control device receiving the motion parameters and converting the motion parameters into a motion control command comprising driving commands for a plurality of motion actuators of the multiaxial motion driving device; and
the driving device providing the driving commands to the respective motion actuators, whereby a series of motion control commands controls the plurality of motion actuators, so that they together drive a reference point on the multiaxial motion driving device to move substantially along a motion trajectory of the motion detector.

In a preferred embodiment of the present invention, the multiaxial motion driving device is a robot arm comprising a plurality of arm segments. In this example, the control device converts the motion parameters of the detection result into a motion control command for controlling the plurality of arm segments of the robot arm; the motion control command drives a motion actuator of each of the arm segments to move the arm segment relatively to each other and/or to the base, so that a series of motion control commands drives the arm segments to move a reference point on the robot arm substantially along the movement trajectory of the motion detector.

The above and other objectives and advantages of the present invention will become more apparent from the following detailed description with reference to the following drawings:

### Brief Description of the Drawings

Figure 1 shows the schematic diagram of a robot arm system using an embodiment of the multiaxial motion control device of the present invention.
Figure 2 shows the block diagram of the robot arm system of Figure 1.
Figure 3 is a curve diagram showing motion components of a motion in three axes in time sequence, as generated by an embodiment of the multiaxial motion control device of the present invention.
Figure 4 shows a flow chart of one embodiment of the invented method for multiaxial motion control while used in the control of a robot arm.

### Detailed Description of the Invention

Hereinafter, embodiments of the multiaxial motion control device and method of the present invention will be described by way of example with reference to the drawings. At first, a multiaxial motion control device according to the present invention, as well as a multiaxial motion control system including the invented control device and a multiaxial motion control method using the control device, will be described taking the robot arm system and the robot arm control device as an applicational example.

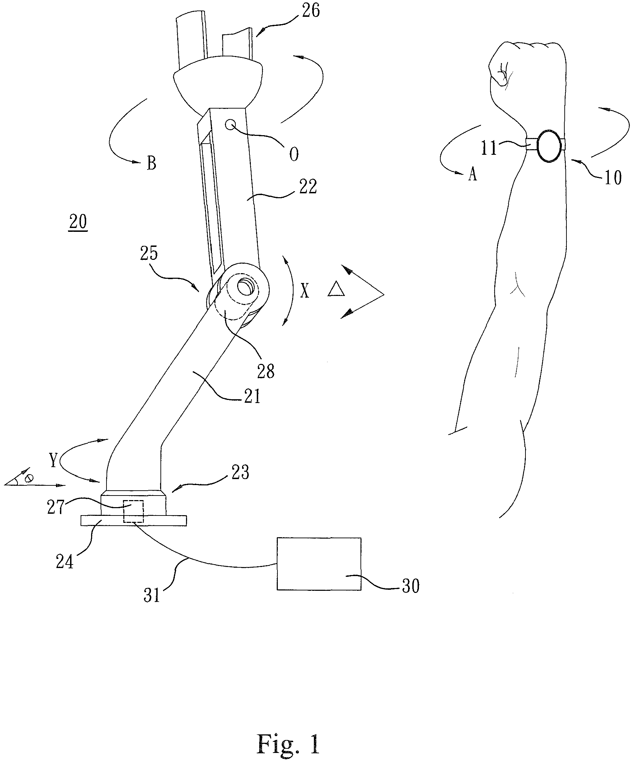

Figure 1 shows the schematic diagram of a robot arm system using an embodiment of the multiaxial motion control device of the present invention. The robot arm system includes a motion detector 10 attached to the wrist of a user, a robot arm 20, and a control device 30. It shall be appreciated that the robot arm system shown in Fig. 1 is merely an example of the applications of the multiaxial motion control device of the present invention, and the robot arm control device is only a specific embodiment of the present invention. Both the robot arm system and the robot arm control device are intended to illustrate the practice and application of the invention, without limiting the features and scope of the invention.

The motion detector 10 shown in the figure is worn on the wrist of the user. However, in practical applications, the motion detector 10 may be held/attached to any movable object, such as the body, a limp, a finger etc. of a person or an animal. It may also be attached to a moving or marching object, such as a vehicle, an aircraft, a flying object etc. In the wearable application, the motion detector 10 may include a holding member, such as a ring like strap or a watch strap 11, while other forms of holding member, such as sticky tape, buckle, clip, chain, sucking cup, magnetic holder etc. are also applicable, as long as it can attach the motion detector 10 to the movable object, whereby moving along with the movements of the moveable object. The most easily conceivable application example is to form a motion detector 10 in the form of a wrest watch, worn on a user's wrist, or in the form of a ring, which is worn on a user's finger.

The robot arm system suitable for the present invention is configured to control the movement of its robot arm 20 so that a particular reference point (O) on the robot arm 20 is moved in response to the movement of the motion detector 10. Figure 1 especially shows a robot arm 20 having two arm segments 21 and 22. The first arm segment 21 of the robot arm 20 is movably connected to a base 24 through the first joint 23. As shown, in the example of Fig. 1, the first joint 23 may be a rotary joint, internally equipped with a motion drive means, i.e., a first motion actuator 27, such as a rotary motor, as well as necessary gears, pulleys. The first arm segment 21 is rotated horizontally with respect to the base 24 as shown by the double arrow Y in the figure. The first motion actuator 27 is preferably a stepping motor which can control the rotation angle of the first arm segment 21 with respect to the base 24 by means of an external controller, such as the control device 30 of the present invention. The first arm segment 21 shown in the figure has a specific angle of tilt, so to enlarge the rotational movement driven by the first motion actuator 27.

In the embodiment of Fig. 1, the second arm segment 22 of the robot arm 20 is movably connected to the first arm segment 21 through a second joint 25. In this example, the second joint 25 may be a rotary joint, internally equipped with a motion drive means, i.e., a second motion actuator 28, such as a rotary motor, as well as necessary gears, pulleys, etc. The second arm segment 22 is rotated in a pitch direction with respect to the first arm segment 21, as shown by the double arrow X in the figure. The second motion actuator 28 is preferably a stepping motor which can control the pitch angle of the second arm segment 22 with respect to the first arm segment 21 by means of an external controller, such as the control device 30. In Fig. 1 a reference point O is specified and locates at the terminal of the free end of the second arm segment 22, i.e., the end not connected to the first arm segment 21. The movement of the first arm segment 21 and the second arm segment 22 cooperates to jointly move the reference point O to reach substantially every point in the space within a radius equal to the sum of lengths of the first arm segment 21 and the second arm segment 22.

The robot arm 20 may additionally include a movable clamp 26. The movable clamp 26 is movably connected to the second arm segment 22 through a third joint. The two clamping pieces of the movable clamp 26 may also be provided with an actuator for clamping and releasing. However, the movable clamp 26 is not any focus of the present invention. Details thereof are thus omitted. In this example, the reference point O of the robot arm 20 is set at the joint of the two clamping pieces.

Although the robot arms 20 shown in Fig. 1 has two arm segments, each provided with an actuator for rotational motions, those skilled in the art are aware that the robot arm 20 may also have less than two, or more than two arm segments. At the same time, their respective actuators may include driving means other than rotational driving means, such as those for piston movement, orbital motion etc., and the manner of movement of each arm segment may be the same or different.

In addition, Fig. 1 also shows a control device 30 in connection with the robot arm 20. The control device 30 generates and provides control/driving commands to the first motion actuator 27 and the second motion actuator 28 through the signal line 31, to respectively control the operation thereof in driving the movement of the first arm segment 21 and the second arm segment 22, which cooperates to moves the reference point as desired. The electric power required by the robot arm 20 and the control device 30 can be provided by means of a conventional power supply (not shown).

The multi-joint robot arm as described above and its control method are well known in the art. The relative movement of the first arm segment 21 and the second arm segment 22 and of the first arm segment 21 and the base, for moving the reference point O to any point in the space within the reachable range of the robot arm 20, can be driven by a conventional controller that provides driving commands to the first motion actuator 27 and the second motion actuator 28. For details thereof, reference may be made to the relevant technical publications regarding the design and control of multi-joint robot arms.

Apart from the conventional art, the present invention provides a multiaxial motion control device and method for the purpose of making the reference point on the free end of the robot arm 20, i.e., the free end of the second arm segment 22, move following the motion of the motion detector 10, i.e., along a trajectory such as the trajectory of the reference point O, arrow B in Fig. 1, corresponding to the trajectory of the motion detector 10, such as arrow A as shown in Fig. 1.

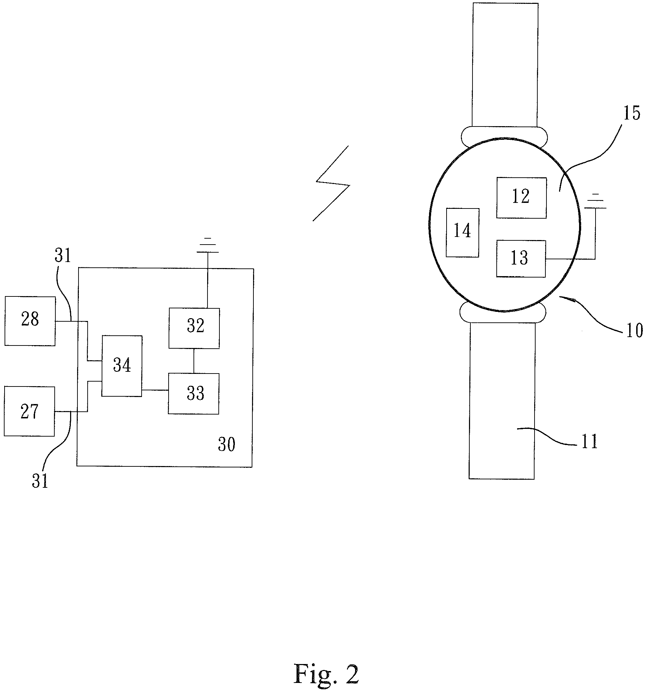

Fig. 2 shows a block diagram of a robot arm system applicable in the present invention. As shown in Fig. 2, the robot system includes a motion detector 10, a robot arm 20 and a control device 30. Also, as shown, the control device 30 is wirelessly connected to the motion detector 10 to allow the user to control the movement of the robot arm 20 using the motion detector 10. In the example of Fig. 2, the control device 30 is provided on the side of the robot arm 20. It is also appreciated by those skilled in the art that it is also possible to provide the control device 30 on the side of the motion detector 10. In this example, the control device 30 and the robot arm 20 are wirelessly connected via the wireless communication device 32 and a wireless communication device (not shown) in the robot arm 20 to exchange data/information.

The motion detector 10 in Fig. 2 has a housing 15 for receiving the motion detection element 12 of the motion detector 10 and a strap 11 attached to the housing 15 for mounting the motion detector 10 to the user's wrist or other bodily parts. The motion detector 10 uses its motion detection element 12 to detect the movement of the wrist. If the control device 30 is provided on the side of the robot arm 20, the motion detector 10 may also provide a wireless communication module 13 to transmit the detection result to the control device 30 via the wireless communication device 32.

The motion detection element 12 may be any type of motion detecting device, such as an accelerometer, a gyroscope, etc., but preferably has a multiaxial motion detection capability. In general, a triaxial accelerometer would be sufficient to provide all required functionalities in the present invention, while it is also possible to use, for example, a six-axis or nine-axis motion detecting device as the motion detection element 12 of the present invention. US Patent Application Series No. 15/341,295 "Wrist Watch Embedded with a Wireless Control Module" provides a motion detection device that can detect the acceleration values in three directions, the angular velocity values in three directions, and the magnetic field values in three directions, all relating to a motion. The detector disclosed therein can be applied to the present invention. Other types or motion detecting devices of the same type or else are also applicable in the present invention.

As is known to those skilled in the art, a motion detecting device generally comprises a detector body that detects a motion and outputs its detection results from its electrodes and an arithmetic circuit that calculates the motion amount or motion components in specific directions using the detection results of the detector body. This arithmetic circuit can be realized by using a commercially available microprocessor circuit, supplemented by the necessary software. Related technologies are well known to those skilled in the art. The motion detection element 12 of the present invention may be provided with an arithmetic circuit (not shown) having a capacity for calculating a motion parameter, i.e., motion amount or motion components in particular directions, of a motion and directly outputting the resulted motion amount or motion components. In the preferred embodiments of the present invention, however, the detection results, i.e., the motion parameters, are the direct outputs of the electrodes of the motion detection element 12, with necessary preprocessing. As for the calculation of the motion amount or the motion components in a particular direction or a number of directions, and the subsequent processing, they are executed by the control device 30.

For this reason, the detection results of the motion detection element 12 is supplied directly to the control device 30 after necessary preprocessing such as A to D conversions. While the control device 30 is provided on the side of the robot arm 20, the detection results of the motion detection element 12 are first supplied to the wireless communication module 13 and then supplied to the control device 30 via a wireless communication channel. In this example, the wireless communication module 13 of the motion detector 10 is connected to the motion detection element 12 for receiving the detection results, i.e., the motion parameters, output from the motion detection element 12 and converting the motion parameters into a suitable format suitable for wireless transmission.

The wireless communication module 13 may comprise any commercially available wireless communication chip or circuit for establishing a communication channel with the control device 30 for exchange of data/information. In a preferred embodiment of the present invention, the wireless communication module 13 is configured to continuously transmit the detection results of the motion detector 10 at a predetermined transmission rate.

Depending on the type of the motion detection element 12, the content of the detection result, i.e., the motion parameter, is also different. In a preferred embodiment of the present invention, the motion detection element 12 is a nine-axis motion detecting device, such as the motion detector provided for the above-mentioned US Patent Application S/N 15/341,295. The motion detector includes a motion detecting device that can detect the acceleration values in three directions, the angular velocity values in three directions, and the magnetic field values in three directions, all pertaining to a motion. The detection results of this type of motion detecting device can be provided to an arithmetic circuit that converts the detection results into the absolute coordinates of the detector in space and outputs them as the motion parameters. The related operation method can be referred to the description of the patent specification, which is incorporated herein by reference. In such embodiments, the wireless communication module 13 simply continuously transmits the coordinate values of the calculation result to the control device 30.

However, in most applications of the present invention, it is not necessary to use such a precision motion detecting device. In general, a detector that can provide motion components of a motion in at least three directions, so to provide the amount of motion per detection/sampling/transmission cycle, would suffice. In such an embodiment, the motion detection element 12 may also include an arithmetic circuit for converting the signals output by the electrodes of the motion detection element 12 into motion components in three predetermined directions and supplying them to the wireless communication module 13. The motion detection element 12 may not include an arithmetic circuit. In this case, the motion detection element 12 directly supplies its detection results to the control device 30, and the desired results are calculated by an arithmetic circuit (not shown) provided on the side of the control device 30.

It is well known to those skilled in the art that the motion detection element 12 does not actually need to provide three sets of motion parameters when providing motion components of the at least three directions, for example, when providing motion components in three directions. For example, a two-axis accelerometer can only produce two sets of motion parameters representing the amount of motion in two directions. However, after conversion, the motion components in three directions can still be provided. This conversion technique is already a known technique. Details thereof are thus omitted.

As described above, in such embodiments, the motion detection element 12 may also include an arithmetic circuit for converting the detector electrode output values into motion components in three predetermined directions and providing them to the control device 30. Of course, it is also possible to provide only two sets of motion parameters to the control device 30, and the desired results are calculated by the command interpreting circuit 33provided on the side of the control device 30.

Since the motion detector 10 is generally in the form of a wearable device and is attached to a movable object, it moves with the object. The motion detector 10 is preferably provided with a power supply 14 for supplying power to the motion detection element 12 (and the wireless communication module 13). The power supply 14 is preferably equipped with a chargeable battery and a necessary power management circuit, i.e., no external power supply is required when used. In a a general application, the power supply 14 includes a battery and a power saving circuit (both not shown). The battery can store a considerable charge and be charged with, for example, a wireless charging technique. The power saving circuit controls the power supply of the battery and stops the battery power supply when no use is necessary. The power saving circuit may also control the wireless communication module 13 for its periodical transmission of the motion parameters. In a particular example, the power saving circuit may still receive an external wake-up signal to start the power supply of the battery. The structure, control, application and other details of the power supply 14 described above are all of the known technique. Details thereof are thus omitted.

The housing 15 of the motion detector 10 may be connected to a holding member 11, such as a watch strap or other forms of ring, belt, buckle, suction cup, magnetic holder etc., to be worn on a movable object such that the motion detector 10 moves with the movement of the object. In a preferred embodiment of the present invention, the motion detector 10 may be worn on the wrist or finger of a human arm and moves following a movement of the wrist or finger.

The function of the control device 30 is to receive the detection results of the motion detector 10 and to generate and output, based on the detection results, motion control commands for controlling the robot arm. If the control device 30 is provided on the side of the robot arm 20, the control device 30 is provided with a wireless receiving function for receiving the motion parameters provided by the motion detector 10. As shown in Fig. 2 the control device 30 has a wireless communication module 32. The wireless communication module 32 is a wireless communication element similar to the wireless communication module 13 of the motion detector 10. In most applications of the present invention, both the wireless communication module 32 of the control device 30 and the wireless communication module 13 of the motion detector 10 are elements that support short-distance wireless communication channels, such as a Bluetooth chip. The two can be connected through the same wireless communication protocol for exchange of information. Applicable wireless communication modules include the commercially available products, the circuit used therein being also well known to the industry. If the control device 30 is provided on the side of the motion detector 10, the function of the wireless communication module 32 would be to transmit the motion control command generated by the control device 30 to the robot arm 20. In such a case, the robot arm 20 will be provided with a similar wireless communication module, so to communicate with the wireless communication module 32 of the control device 30.

In order to convert the detection parameter of the motion detector 10 into a motion control command of the robot arm, the control device 30 includes a command interpreting circuit 33 for converting the detection results, i.e., motion parameters of the motion detector 10 into a control command for controlling the motion of the plurality of arm segments of the robot arm 20. The control device 30 also includes a driving device 34 coupled to the command interpreting circuit 33 for driving the motion actuators 27, 28 of the arm segments 21, 22 of the robot arm 20 in accordance with the motion control commands generated by the command interpreting circuit 33.

As described above, in most embodiments of the present invention, the motion detector 30 produces motion parameters sufficient to represent the respective motion components in at least three axes of a motion. In addition, in application, the motion detector 30 generates the motion parameters successively, i.e., in a sequence along the time axis. Thus, a series of the motion parameters will include data representing the motion direction and motion amount of the motion detector 10 in the three-dimensional space at successive times; the series of motion parameters in combination will form a trajectory of the motion of the motion detector 10 in the space. In a particular example of the invention, the motion parameter is essentially the position or coordinates of the motion detector 10 in the space at successive points in time, and a motion trajectory will also be formed by the combination of the successive positions or coordinates.

If the motion parameter provided by the motion detector 10 is the direct detection result of the motion detection element 12, the command interpreting circuit 33 may be configured to convert the motion parameter into a motion defined by: a rotation angle θ of the first arm segment 21 in the base plane, i.e., an angle in the circle indicated by the double arrow Y in Fig. 1 and a pitch angle Δ of the second arm segment 22 in the vertical direction, i.e., the pitch angle in the direction indicated by the double arrow X in Fig. 1. The command interpreting circuit 33 is further configured to convert the calculated motion into a motion control command for respectively driving the first motion actuator 27 and the second motion actuator 28 to respectively change the rotation angle θ of the first arm segment 21 and the pitch angle Δ of the second arm segment 22, so that the reference point on the robot arm 20 generates a motion correspondingly, including an enlarged or reduced scale of the motion, and to provide the motion control command to the driving device 34.

It is already well known in the art how the detection results of the motion detection element 12 may be converted into a motion defined by a rectangular coordinate system or an axis coordinate system. The above-described various techniques for recognizing a position or motion by the optical image recognition technique, in order to control the movement of a robot arm can be applied to the present invention with necessarily minor modifications. Although in the example of Fig. 1 the motion is defined by a rotation angle θ and a pitch angle Δ, other methods for defining or controlling a motion or a position change in the space can also be applied to the present invention.

On the other hand, if the motion parameters provided by the motion detector 10 are data representing the triaxial motion components of a motion or other position change descriptions, the command interpreting circuit 33 should be configured to convert the motion components or position change information into a motion defined by a rotation angle θ of the first arm segment 21 and a pitch angles Δ of the second arm segment 22. The command interpreting circuit 33 may be further configured to generate motion control commands for the proper realization of the motion by the first motion actuator 27 and the second motion actuator 28 accordingly.

In a preferred embodiment of the present invention, the motion detector 10 generates the motion parameter successively, whereby a series of motion control commands generated by the control device 30 in response to the successive motion parameters controls the relative movement of the arm segments 21, 22 of the robot arm 20, such that the movement of the reference point O of the second arm segment 22 in space follows the motion trajectory of the motion detector 10. The robot arm 20, which is controlled in this manner, thus can simulate the movement of the movable object, for example, to mimic the human actions. Such a control method is quite worthwhile, because the user does not need to learn to familiarize himself with the control method. Such approach has a strong demand in the industry, yet there is no technology to achieve this purpose.

The command interpreting circuit 33 may be configured to successively generate the motion control commands and supply them to the driving device 34, whereby the driving device 34 generates corresponding drive commands and provide them via the signal line and/or power line 31 to the first motion actuator 27 and the second motion actuator 28, so they operate to drive the first arm segment 21 and the second arm segment 22 to move.

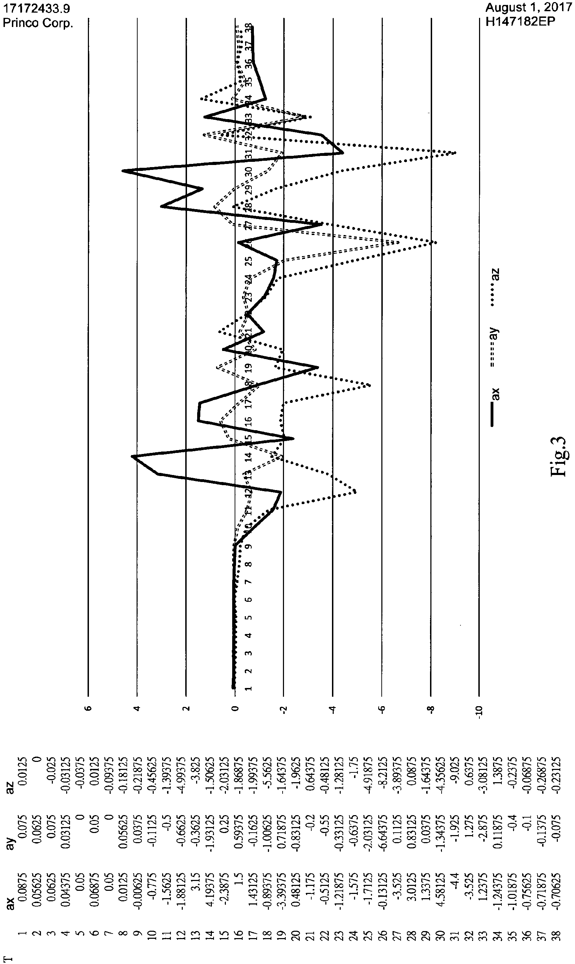

Figure 3 shows motion components of a motion in three axes in time sequence, as generated by the motion detector of an embodiment of the invented multiaxial motion control device. The motion shown in this figure is a "drawing a circle in the air" movement of a human hand. The horizontal axis represents the sampling time and the sampling frequency is 40Hz. The three curves represent the motion components of the motion on the X, Y and Z axes of the Cartesian coordinate system, respectively. The values of the components obtained at each sampling point are displayed in the table on the left side of the graph. The amount of motion of the motion detector in space can be calculated from the triaxial motion components obtained at each sampling point.

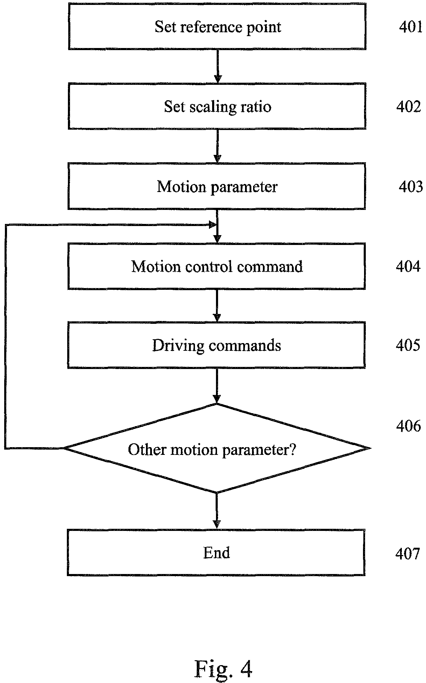

The present invention provides a method for controlling the movement of a multiaxial motion driving device using the multiaxial motion control device of the invention. In the followings, a method for controlling the movement of the robot arm in a robot arm system using the multiaxial motion control device of the present invention will be described, serving as an example to illustrate the invented method. Figure 4 shows a flow chart of the robot arm control method. As shown in the figure, at step 401, a user establishes a wireless communication channel between the motion detector 10 and the control device 30 and, based on the motion detection result, i.e., the motion parameter, output by the motion detector 10, the start position of the reference point O is set. In step 402, the user sets the scaling ratio of the motion amount of the robot arm 20 in respect to the motion detector 10 based on the amount of motion of the motion detector 10 and the corresponding motion amount of the reference point of the second arm segment 22. The initialization is thus complete. After the operation is started, at step 403, the motion detector 10 detects its own motion and generates detection results, i.e., the motion parameter, successively. The motion parameter comprises information describing the motion components of the detected motion in at least three axes. The motion parameter may be in the form of simply a voltage/current signal, or values representative of the motion components or a motion, or values representative of the spatial coordinates of a position. In step 404, the control device 30 receives the motion parameter and interprets the motion parameter into a motion control command applicable to the plural arm segments 21, 22 of the robot arm 20. The motion control command generally includes a motion defined by a rotation angle θ of the first arm segment 21 and a pitch angle Δ of the second arm segment 22, and a speed of motion, i.e., the operation speed of the first motion actuator 27 and the second motion actuator 28, such as their rotational speed. In step 405, the control device 30 generates corresponding driving commands and supplies them to the motion actuators 27, 28 of the respective arm segments 21, 22 of the robot arm 20 to drive the motion actuators 27, 28 to move the respective arm segments 21, 22 of the robot arm 20, whereby the reference point O moves following the movement of the motion detector 10 in the same or an enlarged or reduced scale of motion. In step 406, the control device 30 determines whether or not a new motion parameter has been received. If so, the step returns to 404; otherwise. the step ends at 407.

In the preferred embodiments of the present invention, the motion actuators may cause hysteresis or pause when driven by the driving device. In order to smooth the movement of the robot arm 20 and to follow the motion detector 10 closely, necessary corrections or calibrations can be made by using the power control method of the conventional technique.

As described above, the multiaxial motion control device and method of the present invention can be applied to other types of multiaxial motion driving devices in addition to the robot arm. It will also be apparent from the above description of the application example of the robot arm system that the multiaxial motion detector used in the present invention provides other detection functions, in addition to simply achieving accurate detection results. For example, when applied to an AGV, the vehicle can only move on a plane or a substantial plane and cannot move vertically. However, the remaining direction of motion detectable by the multiaxial motion detector can be used to generate other motion commands or non-motion commands. For example, the user can move the motion detector upwardly to produce an "accelerate" command, and downward to produce a "decelerate" command. Other commands possibly generated including a "stop/start walking" command by turning the motion detector upside down, a "right turn" or "left turn" command by flipping the motion detector clockwise or counterclockwise, or other commands such as generating sound, light by swinging the motion detector up and down or left and right.

The multiaxial motion control device and method of the present invention can control a remote-control vehicle carried by a fluid, such as helicopter or submarine, using the control method as described above. By using the invented motion control device and method, the helicopter or submarine, or the like, moves in the three-dimensional space following the movement of the motion detector. The multiaxial motion control device and method of the present invention can also control an electric pet, such as an electric toy dog, to travel on a plane in a manner similar to the control method of the aforementioned AGV. In addition, the invented multiaxial motion driving device can generate additional commands, such as jump, rise, squat and other action commands. The multiaxial motion detector detects a motion operation that is independent of the motion command and is defined, for example, as an action command such as a command for making a sound, wagging, mouth opening and closing, eye opening and closing etc. All these applications can be realized by the appropriate settings in the command interpreting circuit 33.

It is also known from the above disclosure that in the present invention, the axes or axial components of a motion or the number of the axes or axial components detectable by the motion detector does not need to correspond to the motion driving axes or axial components, and numbers thereof, of the multiaxial motion driving device. In addition, the multiaxial motion driving device may also provide a motion drive capability independent of the motion of the device itself and may generate actions in response to the motion operation of the user.

Although the multiaxial motion driving device and method of the present invention, have been described with reference to specific embodiments regarding the robot arm system, this description is not meant to be construed in a limiting sense. Various modifications of the disclosed embodiments, as well as alternative embodiments, will be apparent to persons skilled in the art. It is, therefore, contemplated that the appended claims will cover all modifications that fall within the true scope of the invention.

## Claims

1. A multiaxial motion control device, comprising:
a motion detector for wearing on a movable object to successively detect an amount of motion of the movable object and output a detection result; and
a control device for receiving the detection result of the motion detector and, based on the detection result, generating a motion control command for a multiaxial motion driving device comprising a plurality of motion actuators designated for each axial component of motion of the multiaxial motion driving device;
wherein the motion detector comprises a multiaxial motion detector for detecting a motion of the motion detector and generating motion parameters defining axial motion components of the motion in at least three axes as the detection result of the motion detector;
wherein the control device comprises a command interpreting circuit for converting a series of successive motion parameters of the motion detector into a series of motion control commands; wherein one motion control command comprises driving commands for the respective motion actuators; and
wherein the series of successive motion control commands controls the motion actuators, so that they together move a reference point on the multiaxial motion driving device substantially along a motion trajectory of the motion detector.

2. The multiaxial motion control device of claim 1, wherein the multiaxial motion driving device is a robot arm having a plurality of arm segments and the motion control command comprises driving commands for respective motion actuators driving the respective arm segments of the robot arm.

3. The multiaxial motion control device of claim 1, wherein the multiaxial motion driving device is an automated guided vehicle (AGV) having a plurality of driving wheels and the motion control command comprises driving commands for the respective drive wheels that drive the AGV to move on a plane.

4. The multiaxial motion control device of claim 1, wherein the multiaxial motion driving device is a multiaxial motion driving device carried by a fluid and the motion control command comprises driving commands for a plurality of motion actuators driving the multiaxial motion driving device to move in three dimensions.

5. The multiaxial motion control device as claimed in any one of claims 1 to 4, wherein the multiaxial motion driving device is provided with a motion drive capability independent of the motion of the device itself, in driving a motion of an auxiliary element and wherein the command interpreting circuit is configured to interpret a motion parameter of the motion detector into a motion control command for the auxiliary element.

6. The multiaxial motion control device as claimed in any one of claims 1 to 4, wherein the multiaxial motion driving device is provided with an auxiliary operation capability other than a motion driving capability and the command interpreting circuit is configured to interpret a motion parameter of the motion detector into an operation command for the auxiliary operation.

7. The multiaxial motion control device of claim 6, wherein the auxiliary operation is at least one selected from the group consisting of generating a sound and emitting light.

8. The multiaxial motion control device according to any one of claims 1 to 4, wherein the motion control command further comprises at least one selected from the group consisting of starting motion, stopping motion, acceleration and deceleration.

9. The multiaxial motion control device according to any one of claims 1 to 4, wherein the motion detector is one selected from the group consisting of a triaxial motion detector, a six-axis motion detector and a nine-axis motion detector.

10. The multiaxial motion control device according to any one of claims 1 to 4, wherein the motion parameter generated by the motion detector comprises representative information of individual axial components of the motion in the at least three axes.

11. The multiaxial motion control device as claimed in any one of claims 1 to 4, wherein a series of motion parameter generated by the motion detector comprises representative information of motion direction and motion amount of a motion in the three-dimensional space in a time sequence.

12. The multiaxial motion control device according to any one of claims 1 to 4, wherein the control device comprises a driving device for providing driving commands to the respective motion actuators of the multiaxial motion driving device based on the motion control command generated by the command interpreting circuit.

13. A robot arm system comprising:
a robot arm comprising a base, at least a first arm segment and a second arm segment, a first joint operatively connecting the first arm segment and the base and a second join operatively connecting the first and second arm segments, and
a motion actuator to drive the first arm segment to move respectively to the base and a second motion actuator to drive the second arm segment to move respectively to the first arm segment;
a motion detector for wearing on a movable object to successively detect an amount of motion of the movable object and output a detection result; and a control device for receiving the detection result of the motion detector and, based on the detection result, generating a motion control command for the robot arm;
wherein the motion detector comprises a multiaxial motion detector for detecting a motion of the motion detector and generating motion parameters defining axial motion components of the motion in at least three axes as the detection result of the motion detector;
wherein the control device comprises a command interpreting circuit for converting a series of successive motion parameters of the motion detector into a series of successive motion control commands; wherein one motion control command comprises driving commands for the respective motion actuators; and
wherein the series of successive motion control commands controls the motion actuators, so that they together move a reference point on the robot arm substantially along a motion trajectory of the motion detector.

14. The robot arm system of claim 13, wherein the motion detector is one selected from the group consisting of a triaxial motion detector, a six-axis motion detector and a nine-axis motion detector.

15. The robot arm system of claim 13, wherein the motion parameter generated by the motion detector comprises representative information of individual axial components of the motion in the at least three axes.

16. The robot arm system of claim 13, wherein a series of motion parameter generated by the motion detector comprises representative information of motion direction and motion amount of a motion in the three-dimensional space in a time sequence.

17. The robot arm system of claim 13, wherein a series of motion parameter generated by the motion detector comprises representative information of positions in the three-dimensional space in a time sequence.

18. The robot arm system of claim 13, wherein the control device comprises a driving device for providing driving commands to the respective motion actuators of the multiaxial motion driving device based on the motion control command generated by the command interpreting circuit.

19. A method of controlling movement of the robot arm of the robot arm system of claim 13, using the motion detector of claim 13, comprising the steps of:
generating a motion of the motion detector along a motion trajectory;
the motion detector detecting the motion and generating a motion parameter representing the motion;
the control device receiving the motion parameter and converting the motion parameter into a plurality of motion control commands for moving the arm segments of the robot arm;
the control device providing the motion control commands to the respective motion actuators to drive the respective arm segments to move relatively to each other and/or to the base;
wherein a series of motion control commands controls the motion actuators to jointly move the arm segments, such that a reference point on a free end of the second arm segment away from the base moves along a motion trajectory of the motion detector.

20. The method of claim 19, wherein the motion parameter comprises information representing axial components of the motion in at least three axes.

21. A method for controlling movement of the multiaxial motion driving device of claim 1 using the multiaxial motion control device of claim 1, comprising the steps of:
generating a motion of the motion detector along a motion trajectory;
the motion detector detecting the motion and generating motion parameters defining axial components of the motion in at least three axe;
the control device of the multiaxial motion control device receiving the motion parameter and converting the motion parameter into a motion control command for the plurality of motion actuators of the multiaxial motion driving device; and
the control device supplying the motion control command to the respective motion actuators,
whereby a series of motion control commands controls the plurality of motion actuators, so that they together drive a reference point on the multiaxial motion driving device to move substantially along a motion trajectory of the motion detector.

22. The method of claim 21, wherein the motion parameter comprises information representing axial components of the motion in at least three axes.

23. The method of claim 21, wherein the motion parameter comprises information representing a motion trajectory of the motion in space.
